(19) **Europäisches Patentamt**

**European Patent Office**

**Office européen des brevets**

(11) **EP 1 553 740 A1**

(12) **EUROPEAN PATENT APPLICATION**

(43) Date of publication:
**13.07.2005 Bulletin 2005/28**

(51) Int Cl.⁷: **H04L 12/56**

(21) Application number: **05250041.0**

(22) Date of filing: **07.01.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **07.01.2004 US 752952**

(71) Applicant: **The Directv Group, Inc.**
**El Segundo, CA 90245 (US)**

(72) Inventors:
• **Arora, Amit**
  **New Delhi 110005 (IN)**
• **Butalia, Gurjit**
  **Uttar Pradesh 20103 (IN)**
• **Jaiswal, Ashwin**
  **Gaithersburg, Maryland 20877 (US)**
• **Byun, Do**
  **Gaithersburg, Maryland 20886 (US)**
• **Ragland, Roderick**
  **Beteshda, Maryland 20817 (US)**

(74) Representative: **Jackson, Richard Eric et al**
**Carpmaels & Ransford,**
**43-45 Bloomsbury Square**
**London WC1A 2RA (GB)**

(54) **Method and system for providing committed information rate (CIR) based fair access policy**

(57)     An approach is provided for supporting a fair access policy to exchange traffic in a radio communication system. A committed information rate (CIR) level is assigned to a terminal according to one of a plurality of throttling states that specify respective different throughput levels according to loading of the communication system. The traffic is forwarded to the terminal based on the current throttling state of the terminal, wherein the traffic throughput is limited to the CIR level of the terminal. This approach as particular applicability to shared capacity systems, such as a satellite communication system.

FIG. 5

**Description**

FIELD OF THE INVENTION

The present invention relates generally to a communications system, and is more particularly related to traffic shaping based on a fair access policy.

BACKGROUND OF THE INVENTION

The maturity of electronic commerce and acceptance of the Internet as a daily tool by a continually growing user base of millions of users intensify the need for communication engineers to develop techniques for enhancing network performance. With the advances in processing power of desktop computers, the average user has grown accustomed to sophisticated multimedia applications, which place tremendous strain on network resources (e.g., switch capacity). Also, because the decrease in application response times is a direct result of the increased processor performance, the user has grown less tolerant of network delays, demanding comparable improvements from the network infrastructure.

Consumers of broadband services typically are engaged in retrieving content from the Internet involving a transfer of large amounts of data (e.g., multimedia, graphics, streaming video and audio, etc.). Such heavy users can consume a disproportionate amount system capacity, thereby depriving other users of needed network resources. Traditionally, Internet Service providers (ISPs) do not have a way to effectively allocate and enforce available bandwidth between their customers. Such disproportionate use is amplified in a shared capacity system. Accordingly, service providers are tasked with guaranteeing fair access by all users.

Based on the foregoing, there is a clear need for improved approaches for providing fair access to shared capacity systems.

**SUMMARY OF THE INVENTION**

The present invention addresses the above stated needs by performing traffic shaping of a shared capacity communication system using a throttling mechanism that is based on Committed Information Rate (CIR) levels. The throttling utilizes a Flow Control Meter to track the load (e.g., outroutes) for regulating bandwidth that is made available to the users. The CIR based throttling mechanism imposes, for example, the following transmission states on the users of the communication system, in order of severity of bandwidth limitation: a Non-throttled state, a Soft Throttle state, a Hard Throttle state, and a Discard Throttle state. The CIR based throttling mechanism, according to one embodiment of the present invention, can be implemented in a gateway of a satellite communication system to regulate traffic to a user according to the current transmission state, in which the throughput cannot exceed the CIR level of the user. Upon receiving a frame, the gateway examines whether the user is entitled to transmit more traffic based on what is left of the CIR. If the user has not exceeded the allocated CIR, then a corresponding CIR queue is identified for a Class of Service (CoS) associated with the traffic. The gateway then determines whether the particular CIR queue has space available. If the CIR queue can accommodate the frame, then the frame is queued. However, if the CIR queue is full, then a frame is removed from the CIR queue. Further, the mechanism determines whether the frame stored in the queue is stale, discarding it if stale; otherwise, the frame is transmitted over an outroute. The above approach advantageously supports more efficient utilization of a scarce system resources (e.g., bandwidth) by encouraging heavy users to make use of bandwidth during lightly loaded periods, and bounding the throughput of such users by their respective CIR levels. With the CIR based throttling mechanism, the most economically advantageous users (i.e., light users) are given good performance, even when the system is heavily loaded, thereby ensuring fair access to system resources.

According to one aspect of an embodiment of the present invention, a method for shaping traffic of a communication system is disclosed. The method includes comparing capacity usage by a network element of the communication with a plurality of thresholds indicating loading of the communication system. The method also includes, in response to the comparison, regulating traffic to the network element according to one of a plurality of transmission states corresponding to the plurality of thresholds and a committed information rate (CIR) designated for the network element.

According to another aspect of an embodiment of the present invention, a system for forwarding traffic in a communication network based on class of service levels is disclosed. The system includes logic configured to compare capacity usage by a terminal with a plurality of thresholds indicating loading of the communication network. The logic is further configured to regulate the traffic to the terminal according to one of a plurality of transmission states corresponding to the plurality of thresholds and one of the class of service levels. The system also includes a queue organized according to the class of service levels and configured to store a frame destined to the terminal according to the one class of service level if the capacity usage exceeds a committed information rate (CIR) associated with the terminal.

According to another aspect of an embodiment of the present invention, a method for supporting a fair access policy to exchange traffic in a radio communication system is disclosed. The method includes assigning a committed information rate (CIR) level to a terminal according to one of a plurality of throttling states that specify respective different throughput levels according to loading of the communication system. The method also includes forwarding the traffic to the terminal based on the one throttling state, wherein the traffic throughput is limited to the CIR level of the terminal.

In yet another aspect of an embodiment of the present invention, a system for shaping traffic of a communication network is disclosed. The system includes means for comparing capacity usage by a network element of the communication with a plurality of thresholds indicating loading of the communication network. The system also includes means for regulating traffic, in response to the comparison, to the network element according to one of a plurality of transmission states corresponding to the plurality of thresholds and a committed information rate (CIR) designated for the network element.

Still other aspects, features, and advantages of the present invention are readily apparent from the following detailed description, simply by illustrating a number of particular embodiments and implementations, including the best mode contemplated for carrying out the present invention. The present invention is also capable of other and different embodiments, and its several details can be modified in various obvious respects, all without departing from the spirit and scope of the present invention. Accordingly, the drawing and description are to be regarded as illustrative in nature, and not as restrictive.

BRIEF DESCRIPTION OF THE DRAWINGS

The present invention is illustrated by way of example, and not by way of limitation, in the figures of the accompanying drawings and in which like reference numerals refer to similar elements and in which:

FIG. 1 is a diagram of a communication system capable of performing Committed Information Rate (CIR) based throttling, according to an embodiment of the present invention;

FIG. 2 is a diagram of a satellite communication system capable of ensuring fair access among users by using Committed Information Rate (CIR) based throttling, in accordance with an embodiment of the present invention;

FIG. 3 is a diagram of Committed Information Rate (CIR) based throttling logic deployed in the gateway of the system of FIG. 2;

FIG. 4 is a diagram of exemplary transmission (or throttle) states associated with users, according to an embodiment of the present invention;

FIG. 5 is a flowchart showing the operation of the Committed Information Rate (CIR) based throttling logic of FIG. 3;

FIG. 6 is a diagram of the queues used in the system of FIG. 1 to support throttling based on Committed Information Rates (CIRs), according to an embodiment of the present invention;

FIGs. 7A and 7B is a flowchart of a process for enforcing CIR levels, according to an embodiment of the present invention;

FIG. 8 is a flowchart of a process for handling traffic of users who have exceeded their CIR levels, according to an embodiment of the present invention; and

FIG. 9 is a diagram of a computer system that is capable of implementing the CIR based throttling logic of FIG. 3, according to an embodiment of the present invention.

DESCRIPTION OF THE PREFERRED EMBODIMENT

A system, method, and software for shaping traffic of a communication system according to Committed Information Rates (CIRs) are described. In the following description, for the purposes of explanation, numerous specific details are set forth in order to provide a thorough understanding of the present invention. It is apparent, however, to one skilled in the art that the present invention may be practiced without these specific details or with an equivalent arrangement. In other instances, well-known structures and devices are shown in block diagram form in order to avoid unnecessarily obscuring the present invention.

Although the present invention is described with respect to the Transmission Control Protocol/Internet Protocol (TCP/IP) suite and a satellite network, it is recognized by one of ordinary skill in the art that the present invention has applicability to other equivalent internetworking protocols and other networks (e.g., terrestrial and other radio systems).

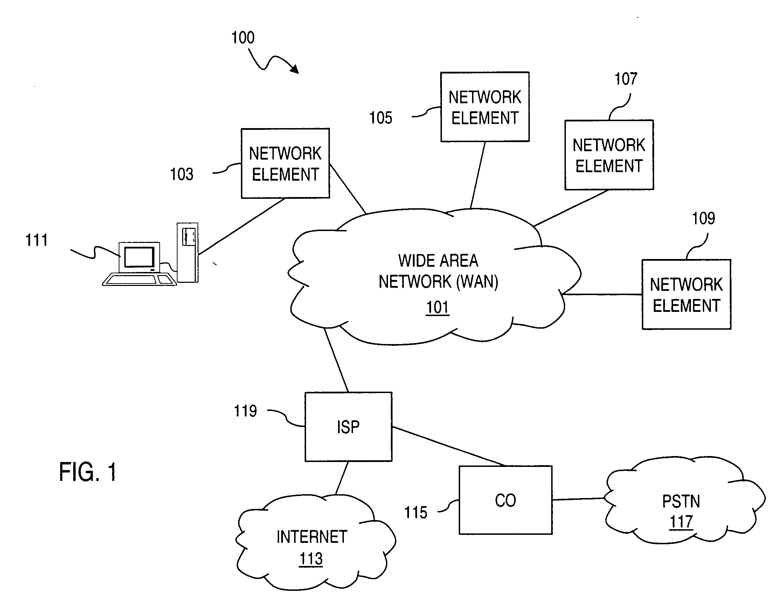

FIG. 1 is a diagram of a communication system capable of performing traffic shaping based on Committed Information Rate (CIR) levels, according to an embodiment of the present invention. A communication system 100 includes a shared capacity network, shown in this exemplary embodiment, as a wide area network (WAN) 101, which is maintained by a service provider (e.g., carrier). The network 101 provides connectivity for a number of network elements 103, 105, 107, 109 to a public data network, such as the Internet 113. The WAN 101 serves as an infrastructure for supporting, for example, broadband services to users (e.g., host 111) connected to the network elements 103, 105, 107, 109. As will be more fully described later, the users of this shared capacity system 100 compete for resources of the WAN 101.

Fair access to the network resources are ensured by a throttling mechanism that selectively limits the available bandwidth to various users based on a Committed Information Rate (CIR) stemming, for example, from Service Level Agreements (SLAs) of the respective users. In an exemplary embodiment, Committed Information Rate (CIR) defines a bandwidth (expressed in bits per second) associated with a logical connection in a permanent virtual circuit (PVC). Advantageously, the CIR based approach of the present invention provides a more accurate and reliable than conventional windows based techniques. This accuracy is in regards to the rate information is transmitted to individual users. For example, if the CIR for a user is set to 1 Mbit/s, then that user will consistently receive 1 Mbit/s if that user has an offered load to generate at least that much traffic. Also, the user will not receive traffic above 1 Mbit/s.

The system 100, under an embodiment of the present invention, limits the outbound data based on the CIR level for the particular network elements 103, 105, 107, 109, by constraining transmission to that allowed by the CIR level in a particular tick interval (i.e., transmission period). The CIR level for a network element is defined by the current throttling state of the user. It is noted that this approach, eventually, will result in a reduced receive window size being advertised to an Internet server (not shown) off the Internet 113 - assuming the data is arriving faster than can be forwarded by the current CIR. The CIR level, according to one embodiment of the present invention, is specified as part of a Fair Access Policy (FAP) profile defined for each user, as further described below in Table 1.

The network elements 103, 105, 107, 109 may be any type of networking device that supports user access to the WAN 101 for receipt of the broadband services; for example, cable modems, Digital Subscriber Line (DSL) modems, Very Small Aperture Terminals (VSATs), router, bridge, or a combination thereof. In this example, a Central Office (CO) 115 relays traffic originated from the public switched telephone network (PSTN) 117 to the Internet 113 via an Internet Service Provider (ISP) 119.

Therefore, the WAN 101 may be any type of network, such as a radio communication system (e.g., satellite network, a digital cellular network, a packet radio network, a microwave network, etc.) or a terrestrial network (e.g., an Asynchronous Transfer Mode (ATM) network, frame relay network, etc.). Further, the WAN 101 may utilize any number of topologies - e.g., a fully meshed topology (i.e., connectivity).

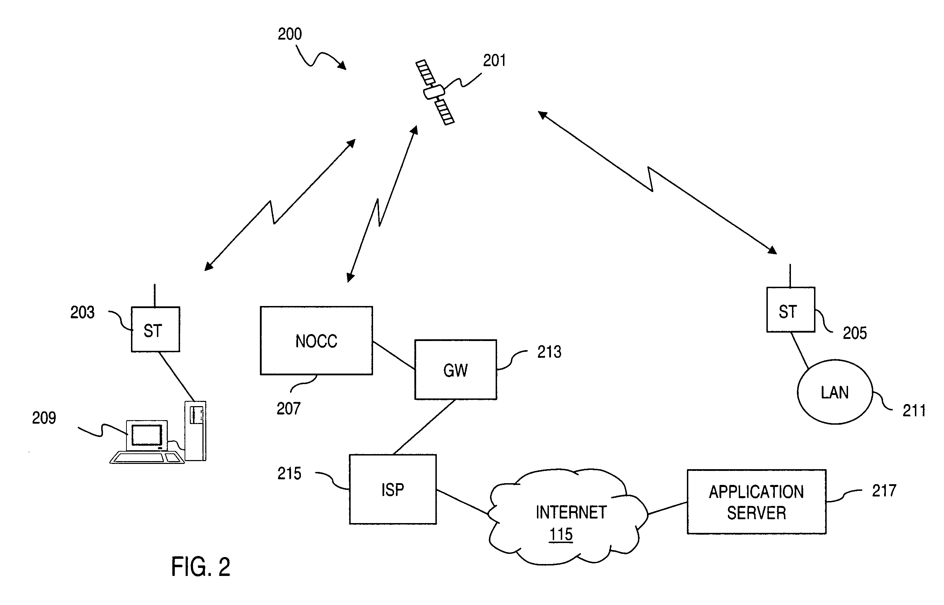

Although the present invention has applicability to a variety of networks, including wireless and terrestrial systems, bandwidth management is of particular concern in a satellite communication system because of the engineering challenges associated with increasing system capacity. Therefore, for the purposes of explanation, the CIR based throttling mechanism is described with respect to a satellite communication system, as shown in FIG. 2.

FIG. 2 is a diagram of a satellite communication system capable of ensuring fair access among users by throttling based on Committed Information Rate (CIR) levels, in accordance with an embodiment of the present invention. The system of FIG. 2 illustrates a specific implementation of the system of FIG. 1, in which the WAN 101 is a satellite network and the network elements 103, 105, 107, 109 are in form of satellite terminals. A satellite communication system 200 utilizes a satellite 201 to transmit information to satellite terminals (STs) 203, 205, and a Network Operations Control Center (NOCC) 207. In an exemplary embodiment, the STs 203, 205 are Very Small Aperture Terminals (VSAT). The satellite 201 performs the necessary bandwidth control functions, in conjunction with the NOCC 207. In the system 200, the STs 203, 205 originate traffic from a particular coverage area and may exchange data among the other STs (not shown).

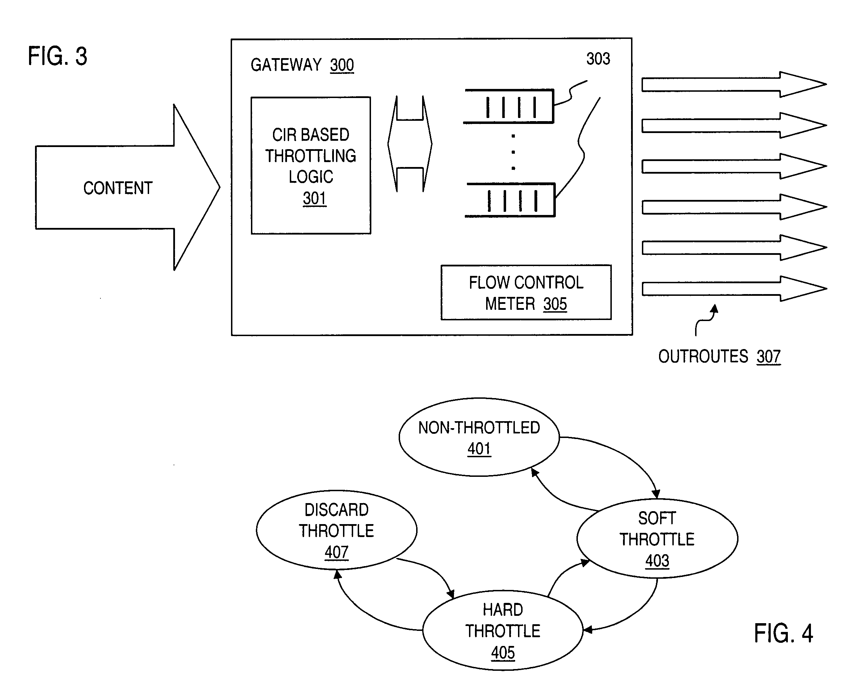

As a hub station, the NOCC 207 manages and controls communication services and operations. For example, the NOCC 207 provisions and identifies the communication channels that are to be allocated. Additionally, the NOCC 207 is responsible for controlling the bandwidth that is made available to the STs 203, 205 via a CIR based throttling mechanism (as further detailed in FIG. 3 below). As seen in FIG. 2, the NOCC 207 also provides interfaces, such as a gateway 213, to either private Intranets (not shown) or the public Internet 113 via an ISP 215. The NOCC 207 can support multiple receive channels (referred to as outroutes) and multiple return channels; however, the NOCC 207 can be configured to provide no return channels, depending on the application. That is, the receive support communication from the NOCC 207 to the STs 203, 205, while the return channels (if available) provide communication from the STs 203, 205 to the NOCC 207. For example, the host 209 of the ST 203 can download content from an application server 217 off the Internet 113. Depending on the content, the outroutes from the NOCC 207 to the ST 203 can be heavily utilized. Because the return channels are optional and such return channels typically do not carry heavy traffic from the STs 203, 205, the CIR based throttling mechanism, according to an embodiment of the present invention, is described with respect to controlling the outroutes of the system 200.

FIG. 3 is a diagram of CIR based throttling logic deployed in the gateway of the system of FIG. 2. The gateway 213 interfaces, for example, with the Internet 113 to retrieve content from the application server 217 for transmission across the satellite communication system 200. To manage this process, the gateway 213, according to an embodiment of the present invention, includes a CIR based throttling logic 301 that monitors one or more buffers 303 (e.g., First In First Out (FIFO) queues) that store the content received from the application server 217. These buffers 303 are serviced, in an exemplary embodiment of the present invention, according to a leaky bucket approach; thus, these buffers 303 can be referred to as buckets. A running average or bucket size is established which is the user's maximum allowable average throughput rate. It is an average rate because the system calculates the bucket size periodically. A more detailed discussion of this leaky bucket approach is provided by commonly assigned U.S. Patent 6,473,793 to *Dillon et al.,* entitled "Method and Apparatus for Selectively Allocating and Enforcing Bandwidth Usage Requirements on Network Users," which is incorporated by reference herein in its entirety.

The gateway 213 also utilizes a Flow Control Meter (FCMeter) 307 to track latencies of the buffers 303, which reflect the load on the outroutes 307. Based on the Flow Control Meter 305, the CIR based throttling logic 301 reduces the bandwidth available to the user requesting the content by limiting use (i.e., "throttling") of the outroutes according to CIR levels, thereby limiting more and more heavily active users as the system 200 becomes heavily loaded.

The throttling logic 301 maintains a running average of the Flow Control Meter (FCMeter), and then computes throttling values as a function of this running average value. The running average, for example, is updated every time the Flow Control Meter value is incremented or decremented.

Data transmitted through the communication system 200 generally is transmitted as quickly as possible to satisfy a user's data requirements. However, it is possible that a few users will attempt to acquire such a great amount of data that their data acquisition uses more and more of the systems resources, effectively slowing down other user's data acquisition. All data is transmitted at a constant rate in one or more channels. The duration and number of channels that is allocated to the user determine how much data can be transmitted in a given amount of time. Accordingly, the throttling logic 301 employs a leaky bucket approach to provide bandwidth management by imposing transmission states to users. These transmission states, which are more fully described below in FIG. 4, are categorized based on transmission behavior of the users and the load of the system 200.

FIG. 4 is a diagram of exemplary transmission states associated with users, according to an embodiment of the present invention. The throttling logic 301 imposes the following transmission states (or throttle states) on the users of the system 200, in order of severity of bandwidth limitation: an Non-throttled state 401, a Soft Throttle state 403, a Hard Throttle state 405, and a Discard Throttle state 407. In the Non-throttled state 401, there are no limitations, per se, on the user. The first level of restriction, is the Soft Throttle state 403. In the Hard Throttle state 405, the bandwidth that is made available to the user is even more restricted. Lastly, in the Discard Throttle state 407, the throttling logic 301 would require dropping (i.e., discarding) of packets.

The current throttling state dictates the CIR level for a user in a tick interval. As mentioned, a leaky bucket is maintained to estimate the running average throughput of the user. Each throttling state is associated with a throughput threshold, which is converted (internally by the FAP logic) into a bucket depth threshold.

Turning back to FIG. 3, the logic 301 executes a CIR algorithm that limits the user's throughput. CIR enforcement provides a mechanism for controlling the outbound throughput, and is independent of the type of data being sent out. The following pseudo-code describes the CIR enforcement mechanism (whenever a packet is to be transmitted), according to an embodiment of the present invention.

When a packet is received for a user, the following code is executed.

```
if (user->cirLeft <= 0 || user->cirQueue[CoS].qHead)
    Enqueue buff on the user->cirQueue[CoS];
    else
    {
        if (user->cirTick != CurrentCIRtick)
        {
            user->cirTick = CurrentCIRtick;
            user->cirLeft = user->cirLevel;
        }
        user->cirLeft -= buff->Size;        // Should
include IP Header
        Add buff to the uplink queue;
        if (user->cirLeft <= 0)
            Add user to the blocked queue;
    }
When ever the Tick timer goes off:
 CurrentCIRtick++;
    For each user on the blocked queue
    {
        user->cirTick = CurrentCIRtick;
        user->cirLeft += user->cirLevel;
        For each CoS queue in order of outroute priority
        {
            while(user->cirLeft > 0 && user-
>cirQueue[CoS].qHead)



            {
                Remove first buff from the user-
>cirQueue[CoS];
            If the packet is not too stale to be sent
                {
                user->cirLeft -= buff->Size;
                Add buff to the uplink queue
                 }
             else
        discard this frame
            } /*end of while loop*/
            if(user->cirLeft < 0)
                break;      //user's CIR has been
exhausted, move onto the next user
            }
        if (user->cirLeft > 0)
            Remove user from blocked queue
    }
```

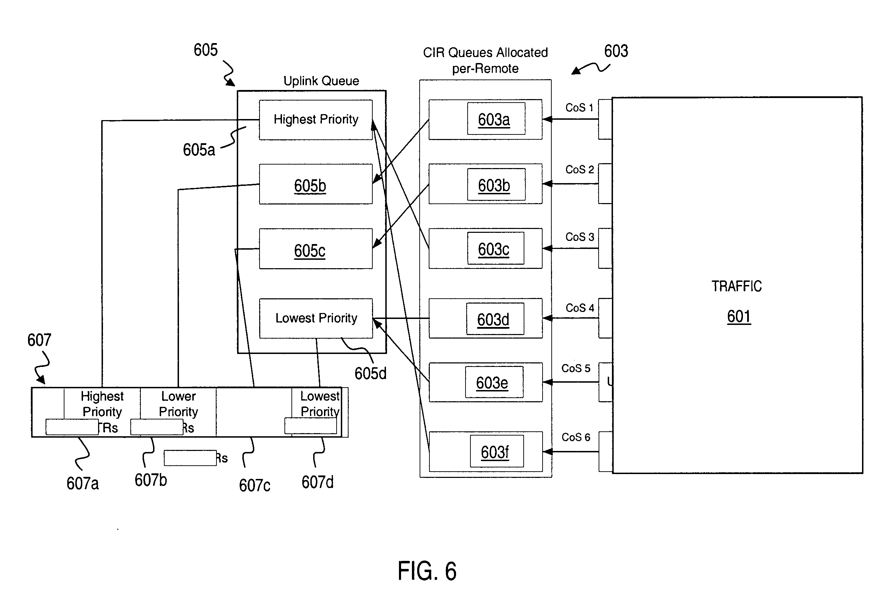

In the above scheme, CoS signifies a Class of Service, which provides a capability to prioritize traffic, as more fully described below with respect to FIG. 6. Because each throttling state is associated with a CIR level, the user in a particular throttling state cannot transmit beyond the allowed CIR level for that state. The logic 301 queues up incoming packets from the application server 217, in the buffers 303. As will be explained with respect to FIG. 6, these buffers 303 can be managed as uplink queues, CIR queues, and transmission buffers. The logic 301 takes these incoming packets from a CIR queue and places them on the an uplink queue. The CIR Left value for each user is set either by the logic 301 on the arrival of the first packet or before moving queued up data from the CIR queues to the uplink queues. Packets that are to be transmitted are placed on the transmission buffers.

The above approach accounts for missed ticks (which can occur over a period of time if the logic 301 is not able to complete it's processing in a tick interval), by maintaining a running sum of the delta (i.e., difference) of the time taken by the logic 301 minus the tick interval. If the sum is zero or less than zero, then no corrective action needs to be taken. If it is greater than zero, then corrective action is performed. For example, if in a tick interval, the logic 301 processes for 35ms, then the logic 301 would have slept for 15ms (50 - 35). Instead of sleeping for 15ms, the logic 301 checks the sum of the delta values (e.g., 10ms), and sleeps for only 5ms (15 - 10). Since the logic 301 sleeps for a lesser amount of time, therefore it is ready to send more data, and thus compensates for having taken more time to send data in an earlier tick.

Table 1, below, lists the various exemplary FAP parameters that have been made a part of the FAP profile. The default values of these parameters are exemplary in nature and are typical of an average user (e.g., terminal 203). These default values are used in case a particular configuration parameter is not found in the FAP profile for the user. The default values of these parameters correspond to a "no - throttling" profile.

Table 1

| PARAMETER NAME | DEFAULT VALUE | DESCRIPTION |
|---|---|---|
| LeakRate | 600kbps | A user downloading data at this average rate would have a zero bucket depth (B, in bytes). The data sent to the user over the satellite causes increase in bucket depth. Every minute, a finite number of bytes is subtracted from the bucket depth to account for leaking. |
| DisconnLeakRate | 600kbps | A user downloading data at this average rate would have a zero bucket depth (B, in bytes). The data sent to the user over the satellite causes increase in bucket depth. Every minute, a finite number of bytes is subtracted from the bucket depth to account for leaking. |
| RADuration | 60 minutes | The duration over which the running average throughput (RAT) is calculated (RAT = B/D), where D is the running average duration (i. e., RADuration). RAT is displayed in gateway statistics. |
| ThruSoftThresh | 400kbps | Soft-Throttle Threshold (kbps, default 400kbps): The average data rate that a user can maintain over a period of D minutes without encountering any throttling. A user is soft-throttled when his bucket depth becomes greater than $(T_1 - L_1) * D$ bytes, where $T_1$ is the ThruSoftThresh, and is the $L_1$ LeakRate. |

Table 1   (continued)

| PARAMETER NAME | DEFAULT VALUE | DESCRIPTION |
|---|---|---|
| ThruHardThresh | 600kbps | The average data rate that a user can maintain over a period of D minutes without encountering any hard-throttling. A user is soft-throttled when his bucket depth becomes greater than $(T_2 - L_1)*D$ bytes, wherein is the $T_2$ ThruHardThresh and is the $L_1$ LeakRate. |
| PeakUnThrThru | 625kbps | UnThrottled Peak Throughput. The maximum throughput that a user can get when not throttled |
| PeakSoftThrThru | 625kbps | Soft-Throttle Peak Throughput. The maximum throughput that a user can get when in soft-throttled state. |
| PeakHardThrThru | 625kbps | Hard-Throttle Peak Throughput: The maximum throughput that a user can get when in hard-throttled state. |
| HysteresisMin | 0 minutes | Defines the number of minutes for which the user will remain in a throttling state while recovering. |
| EnableDisconnFwd | 1, disconnect forwarding is enabled | Defines whether or not packets will be forwarded when a user is not connected. |
| DisableDiscardThrottling | 0, discard throttling is enabled | Defines whether or not discard throttling is disabled for the user. |
| CIR Queue Length Cos1 | 100 packets | Defines the CIR queue length (in number of packets) for the CIR queue being used for class of service 1. |
| CIRQueueLengthCos2 | 100 packets | Defines the CIR queue length (in number of packets) for the CIR queue being used for class of service 2. |
| CIRQueueLengthCos3 | 100 packets | Defines the CIR queue length (in number of packets) for the CIR queue being used for class of service 3. |
| CIRQueueLengthCos4 | 100 packets | Defines the CIR queue length (in number of packets) for the CIR queue being used for class of service 4. |
| CIRQueueLengthCos5 | 50 packets | Defines the CIR queue length (in number of packets) for the CIR queue being used for class of service 5. |

Table 1   (continued)

| PARAMETER NAME | DEFAULT VALUE | DESCRIPTION |
|---|---|---|
| CIRQueueLengthCos6 | 50 packets | Defines the CIR queue length (in number of packets) for the CIR queue being used for class of service 6. |
| RemovePktFromRearOrFrontForCos1 | 0, remove from front | Defines whether to remove packets from the front or rear of the CIR queue for class of service 1 in case the queue is full. |
| RemovePktFromRearOrFrontForCos2 | 0, remove from front | Defines whether to remove packets from the front or rear of the CIR queue for class of service 2 in case the queue is full. |
| RemovePktFromRearOrFrontForCos3 | 0, remove from front | Defines whether to remove packets from the front or rear of the CIR queue for class of service 3 in case the queue is full. |
| RemovePktFromRearOrFrontForCos4 | 0, remove from front | Defines whether to remove packets from the front or rear of the CIR queue for class of service 4 in case the queue is full. |
| RemovePktFromRearOrFrontForCos5 | 0, remove from front | Defines whether to remove packets from the front or rear of the CIR queue for class of service 5 in case the queue is full. |
| RemovePktFromRearOrFrontForCos6 | 0, remove from front | Defines whether to remove packets from the front or rear of the CIR queue for class of service 6 in case the queue is full. |
| StalenessLimitForCos1 | 2000ms | Defines the maximum amount of time a packet can remain queued up in the CIR queue for class of service 1 after which it will be considered stale. |
| StalenessLimitForCos2 | 2000ms | Defines the maximum amount of time a packet can remain queued up in the CIR queue for class of service 2 after which it will be considered stale. |
| StalenessLimitForCos3 | 2000ms | Defines the maximum amount of time a packet can remain queued up in the CIR queue for class of service 3 after which it will be considered stale. |
| StalenessLimitForCos4 | 2000ms | Defines the maximum amount of time a packet can remain queued up in the CIR queue for class of service 4 after which it will be considered stale. |

Table 1   (continued)

| PARAMETER NAME | DEFAULT VALUE | DESCRIPTION |
|---|---|---|
| StalenessLimitForCos5 | 500ms | Defines the maximum amount of time a packet can remain queued up in the CIR queue for class of service 5 after which it will be considered stale. |
| StalenessLimitForCos6 | 100ms | Defines the maximum amount of time a packet can remain queued up in the CIR queue for class of service 6 after which it will be considered stale. |
| CosRtpMap | 0 | Defines the outroute priority for RTP (Real Time Protocol) traffic. |

The logic 301 converts these throughputs into CIR levels, as the throughputs are generally defined over a predetermined interval (e.g., one second), while the CIR tick interval is same as the gateway latency parameter (e.g., about 30ms).

The throttling capacity can be enabled/disabled by a configuration parameter (not shown in Table 1) stored in the FAP profile. When the throttling feature is disabled, all the FAP profiles are initialized to a default profile (which can be hard-coded), which simulates the effect of no throttling. This is accomplished by setting the CIR levels to very high values so that user is limited, for example, by a maximum window size advertised to the Internet host for a single TCP connection and a maximum number of simultaneous TCP connections. Also, when the throttling feature is disabled no data is ever queued up in the CIR queues, as the CIR levels will be very high values, all the traffic is forwarded directly on the uplink queues. The interaction between the TCP window sizes and the CIR based throttling mechanism can be made more direct using the approach described in commonly assigned co-pending U.S. Patent Application to *Dillon et al.* (Serial Number 10/319,117), entitled "Method and System for Load Sensitive Throttling" filed on December 13, 2002, the contents of which are hereby incorporated by reference.

As mentioned above, the throttling logic 301 employs a leaky bucket approach to resource management, whereby a bucket is maintained for each user that keeps track of the number of bytes sent to the user over the satellite link. The bucket of a user helps determine the transmission state of the particular user. As the system dedicates one or more outroutes (i.e., bandwidth) to a user's request, the user's throughput rate increases. The bucket begins to fill at whatever rate the system allows it to, based on outroute availability and file size. The user's bucket may then fill at a rate much faster than which it can be emptied (the leak rate). As the throughput rate increases, the transmission state changes, as shown in FIG. 4. Corresponding to these states of Non-throttled state 401, Soft Throttle state 403, Hard Throttle state 405, and Discard Throttle state 407 are the respective leaky bucket threshold rates: Soft Throttle Rate (STHR), Hard Throttle Rate (HTHR), and Discard Throttle Rate (DTHR). The soft and hard throttle states restrict the user from requesting additional data. The system 200 reallocates the outroutes, effectively limiting how much data can be transmitted to user. It is possible, though, for the user to persist in requesting even more data. If this occurs and DTHR 1310 is reached, the system will discard user's data until the user's throughput rate reaches the HTHR.

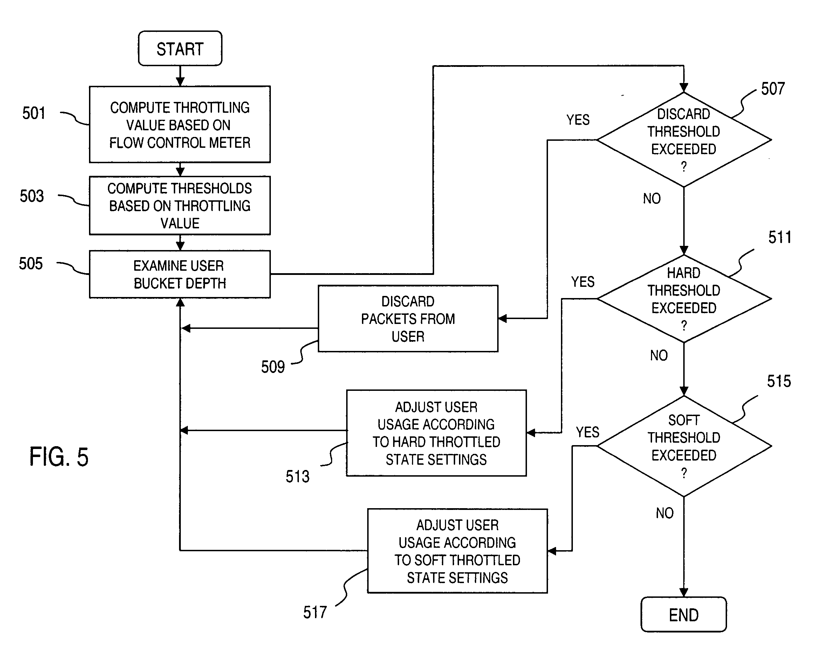

The throttling logic 301 periodically compares the user current bucket size with threshold values corresponding to the transmission states (i.e., Non-throttled state 401, Soft Throttle state 403, Hard Throttle state 405, and Discard Throttle state 407); the user enters the appropriate state based on this comparison, as detailed with respect to FIG. 5.

FIG. 5 is a flowchart showing the operation of the CIR based throttling logic of FIG. 3. The throttling logic 301 monitors data throughput from the users via the Flow Control Meter 305, and periodically calculates a throttling value that is applied to all users' "buckets" and moves users into soft, hard or discard transmission states. Thus, the throttling value is calculated based on the value of the Flow Control Meter 305, as in step 501 to determine, per step 503, the threshold values for the transmission states 401, 403, 405, 407.

When the throttling logic 301 is activated, the threshold values are calculated and scaled using the current throttling value. The throttling logic 301, in an exemplary embodiment, utilizes throttling values between 0 and 10,000 for the throttling value, which initially is set to 10,000; these values effectively scale the user's bucket depth as necessary to move a user into a Hard Throttle state 405. This bucket depth necessary to move a user into hard throttling is referred to as the Hard Throttle Rate (HTHR). The HTHR can range from 0 (all users are in the Hard Throttle state as soon as data throughput occurs) to 10,000 (all users may eventually reach the Hard Throttle state). Similarly, the Soft Throttle Rate (STHR) is the rate at which a user is moved from a Non-throttled state 401 to a Soft Throttle state 403; and the Discard Throttle Rate (DTHR) is the rate at which the user moves from the Hard Throttle state 405 to the Discard Throttle state 407.

Following the determination of the new threshold values for the throttle states, the throttling logic 301 then monitors the user's bucket depth, as in step 505, for all the users. Next, the throttling logic 301 compares the users' bucket depths to the new threshold throttling values, placing such users into the suitable throttle states as appropriate, per steps 507-517. Specifically, the throttling logic 301 determines, as in step 507, whether the DTHR threshold has been exceeded; if so, the user is placed in the Discard Throttle state 407, whereby packets are dropped (step 509). If the DTHR threshold has not been exceeded, the throttling logic 301 checks, as in step 511, whether the HTHR threshold has been crossed, in which case the user is placed into the Hard Throttle state 405. In this state 405, the user's available bandwidth is limited accordingly, per step 513. If the bucket depth of the user is below the HTHR threshold, the throttling logic 301 determines whether the STHR threshold is exceeded (step 515), thereby placing the user into the Soft Throttle state 403, such that the user's bandwidth usage is adjusted accordingly, per step 517.

FIG. 6 is a diagram of the queues used in the system of FIG. 1 to support throttling based on Committed Information Rates (CIRs), according to an embodiment of the present invention. As seen on the right of the figure, traffic 601 is mapped to multiple Class of Service (CoS) levels, of which, by way of example, six different CoS levels are shown. Class of Service (CoS) designations provides a way of managing traffic in a network by grouping similar types of traffic (e.g., e-mail, streaming video, voice, large document file transfer, etc.) together and treating each type as a class with its own level of service priority. It is recognized, however, that any number of CoS levels can be utilized. These CoS levels correspond to respective CIR queues 603a-603f (which are designate on a per terminal basis). In turn, each class of service is mapped into a corresponding outroute priority. This outroute priority is a priority assigned to a frame inside the gateway 300 that is used to identify the uplink queue 605 that will be used to hold frames for this CoS for this user and also to logically partition the transmission buffers 607 into different priorities.

Generally, if the user's CIR level has not been exhausted, incoming traffic is queued in the uplink queue 605, and then copied to the transmission buffers 607, which store, for example, the traffic for a full tick (around 30ms).

In this scenario, because there are six CoS levels (and thus six CIR queues 603a-603f) and four outroute priorities, therefore, multiple CoS levels can map onto the same outroute priority, as represented by uplink queues 605a-605d. Because six CIR queues 603 are utilized for four outroute priorities, a "staleness" criterion is applied to queued up the traffic.

The system of FIG. 6, in an exemplary embodiment, provides first in first out (FIFO) service to the same priority traffic for all users as long as their CIR is not exceeded. In this manner, a situation is avoided whereby low priority packet for a user gets serviced earlier than the higher priority traffic for another user.

As earlier described, the logic 301 also supports ease of disabling CIR enforcement by defining a global configuration parameter stored in the FAP profile to determine whether CIR enforcement is enabled. If CIR enforcement is disabled, then the traffic is sent to the uplink queue 605.

The per user CIR is shared equally among all traffic types. That is, if low priority traffic comes in before high priority traffic, then the low priority traffic can consume as much capacity as the CIR level permits. As a result, the CIR may get exhausted and the high priority traffic gets queued up on the CIR queues 603 and is transmitted in the next tick, whereas the low priority traffic processed in the current tick.

In general, there is a limit on the number of packets that can be queued up in the CIR queues 603. Once this limit is reached, frames are dropped from the queue 603 to make space for the incoming frames. The maximum number of packets that can be put on a CIR queue 603 is defined by a configuration parameter (Table 1). The CIR queue length, in an exemplary embodiment, can correspond to the peak unthrottled CIR for a user. According to an embodiment of the present invention, a configuration parameter, which corresponds to each CIR queue 603a-603f, is defined for the maximum number of packets that can be put on that queue. Further, another configuration parameter, which can be included in the Fair Access Policy (FAP) profile, defines whether to drop frames from the rear or front of a CIR queue 603 in case the queue length limit is reached.

The CIR queue length limit for CIR queues is defined by configuration parameters in the FAP profile. In an exemplary embodiment, the following formula can be used to configure the CIR queue length limits for the CIR queues 603:

$$CIR\ queue\ length\ (in\ number\ of\ packets) = ScaleUpFactor * (unthrottled\ throughput * 1000 *$$

$$RTT))/(PacketSize*8)$$

The "ScaleUpFactor" has been introduced in the above equation to account for any errors in the estimation of the Round Trip Time (RTT) and the packet size. For example, assuming the following values: ScaleUpFactor = 1.5; Unthrottled throughput = 400kbps; RTT = 2s; and PacketSize = 1500 bytes, the CIR queue length (in number of packets) equals 100. The CIR queue length limit is fixed based on the unthrottled CIR level, irrespective of the current throttling state of the user.

The CIR queue length limit can be calculated based on the type of traffic; for example, for RTP (Real Time Protocol), UDP (User Datagram Protocol) traffic, the following formula can be utilized:

$$RTP/UDP\ CIR\ queue\ length\ limit = ScaleUpFactor * (\ unthrottled\ throughput * 1000 * (RTT/$$

$$2)) / (PacketSize*8)$$

The RTT in the above equation has been divided by 2, since for RTP, UDP traffic no Acknowledgement messages (ACKs) are expected.

An internal flow control mechanism employed by the gateway 300 takes into account the congestion that may occur within the gateway 300. The gateway 300 queues up data in the uplink queues 605 and the latency being experienced in these queues is a measure of the congestion inside the gateway 300. The uplink queue latencies can be used to calculate the FCMeter(s) for each outroute priority. The FCMeter is used to reduce both the inflow and outflow of data to and from the gateway 300.

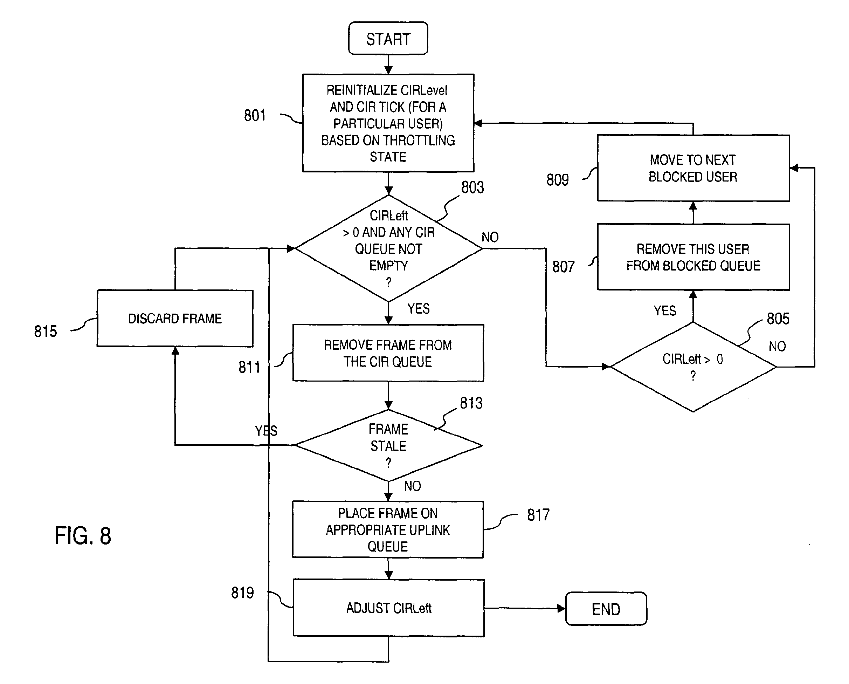

According to one embodiment of the present invention, the logic 301, in addition to transmitting the contents of the transmission buffers 607 and putting frames from the uplink queue 605 to the transmission buffers 607, also services the CIR queues 603 for "blocked users". A blocked user is one, who has exceeded his CIR level for a tick interval, but still has more data to send; this traffic is queued up in his CIR queues 603. In an exemplary embodiment, a separate queue is maintained for the blocked users. The logic 301 executes the following tasks (in the following order): move contents of the uplink queues 605 into the transmission buffers 607, send out the contents from the transmission buffers 607, and move the contents of the CIR queues 603 (for users who had exceeded their CIR in this tick interval) into the uplink queues 603. This operation is more fully described in FIG. 8.

The gateway 300 also supports "admission control," whereby if there is no space left on the uplink queue 605, the packets received from the application server are discarded. The size of the uplink queue 605 can be specified by a configuration parameter (per the FAP profile).

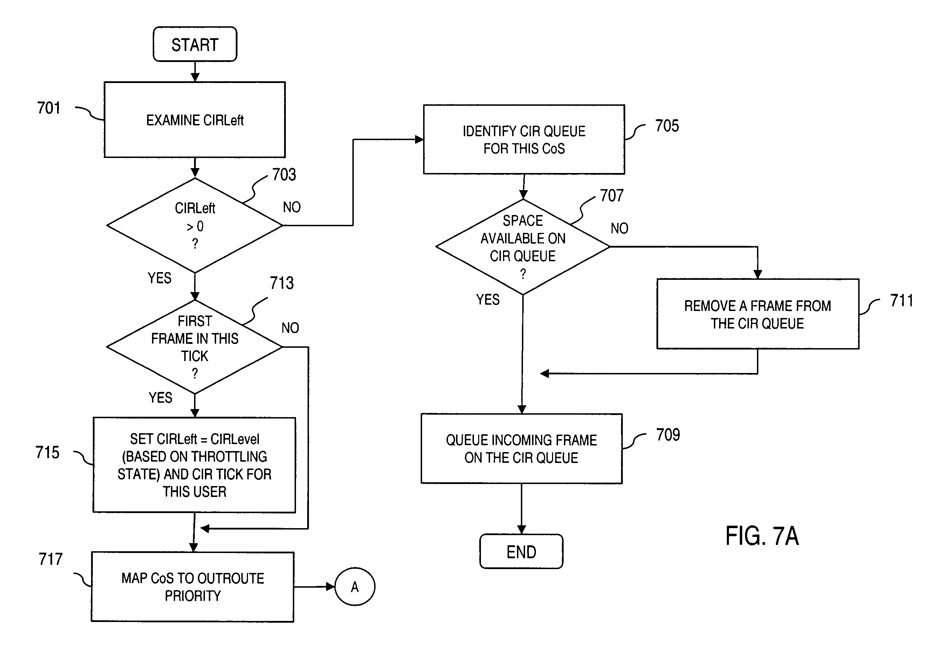

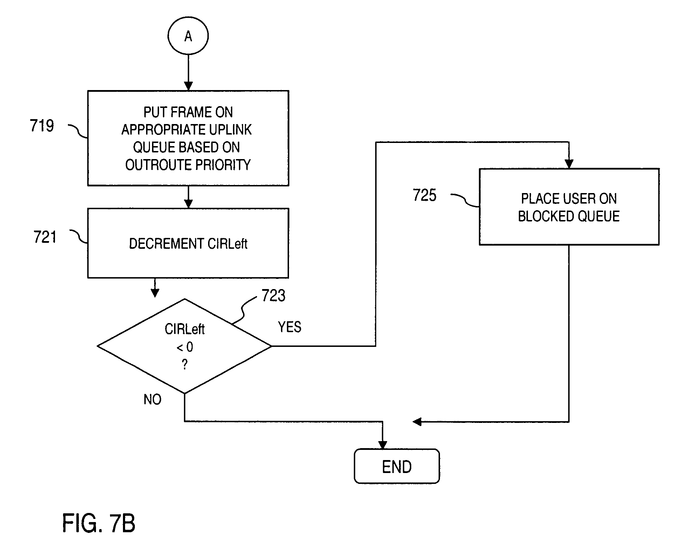

FIGs. 7A and 7B is a flowchart of a process for enforcing CIR levels, according to an embodiment of the present invention. Upon receiving a frame, the gateway 300 examines whether the user is entitled to transmit more traffic based on what is left of the CIR ("CIRLeft"), per steps 701 and 703. If the user has exceeded the allocated CIR (i.e., CIRLeft < 0), then the particular CIR queue (603a-603f) is identified for the CoS associated with the traffic, per step 705. Next, the gateway 300, as in step 707, determines whether the particular CIR queue (603a-603f) has space available. If the CIR queue (603a-603f) can accommodate the frame, then the frame is queue (603a-603f), per step 709. However, if the CIR queue (603a-603f) is full, then a frame is removed from the CIR queue (603a-603f), per step 711.

If in step 703, the CIRLeft is greater than 0, then a determination is made as to whether the frame is the first in the tick (or interval), as in step 713. If the frame is the first in the tick, then, as in step 715, the CIRLeft is set to the CIR level ("CIRLevel") of the user (which is predetermined).

In step 717, the CoS is mapped to the outroute priority. The frame is accordingly placed on the appropriate uplink queue 605a-605d, per step 719. Next, the CIRLeft is decremented, per step 721. At this point, the CIRLeft is again examined (step 723). If the CIRLeft is less than zero, then the user is placed in the blocked queue, as in step 725.

FIG. 8 is a flowchart of a process for handling traffic of users who have exceeded their CIR levels, according to an embodiment of the present invention. The logic 301 loops through the list of blocked users, i.e. users who have exceeded their CIR for a particular transmission interval (i.e., tick), takes up as much data as possible from the CIR queues 603 and puts the frame on the uplink queue 605 so that the frame can be sent out in the subsequent ticks.

The CIR queues 603, in an exemplary embodiment, are processed in the decreasing order of their priority. Since there are only four uplink queues (FIG. 6), multiple CIR queues 603 may map onto the same priority. Hence, there may be a situation where two CIR queues mapping to the same priority will have to be serviced in, for example, a round-robin fashion.

In step 801, for a particular user, the CIRLevel and CIR tick values are reinitialized based on the throttling state. Next, it is determined whether the user has not exceeded the user's CIR (i.e., CIRLeft is greater than zero) and whether any CIR queue is not empty (i.e., available), per step 803. If the determination is in the negative, the gateway 300 decides whether the user has not exceeded the CIR (step 805); if not, the gateway removes the particular user from the blocked queue (step 807). However, if the user has exceeded the allocated CIR, the gateway 300 addresses the next blocked user, as in step 809.

With respect to the decision of step 803, if the user has not exceeded the allocated CIR and frame is available within the CIR queue 603, the frame is removed from the CIR queue 603 (step 811).

In the event there is a sudden burst of traffic (e.g., more traffic from users than what the gateway 300 can process), the gateway 300 becomes congested, resulting in filling up the CIR queues 603. In such a case, by the time the logic 301 removes a packet from a CIR queue 603, it might have been queued up for so long that either the application that is waiting for that packet will reject it or the application that generated that packet might already have retransmitted it. Therefore, when a packet is removed from the CIR queue 603, the logic 301 checks, as in step 813, whether the packet has been queued up for more than a configurable amount of time (i.e., "stale"), and if so the packet is discarded (per step 815). The maximum time for which a packet can remain queued up in a CIR queue is defined as a part of the FAP profile. The FAP profile, for example, can specify six configuration parameters, one for each class of service, which will define the staleness limits (Table 1).

If the frame is not stale, the frame is placed on the uplink queue 605 corresponding to the proper CoS, as in step 817. Next, the CIRLeft value is adjusted, per step 819.

The above process of CIR based throttling can effectively implement a fair access policy such that all users of the system 200 can utilize system resources according to, for example, their CIR levels.

It is recognized that the CIR based throttling logic 301 can be implemented in hardware, software, firmware, or any combinations thereof, and utilized in enhancing performance of numerous types of networks (e.g., wireless and terrestrial systems). In particular, the CIR based throttling logic 301 can be implemented in a general purpose computer, as described below.

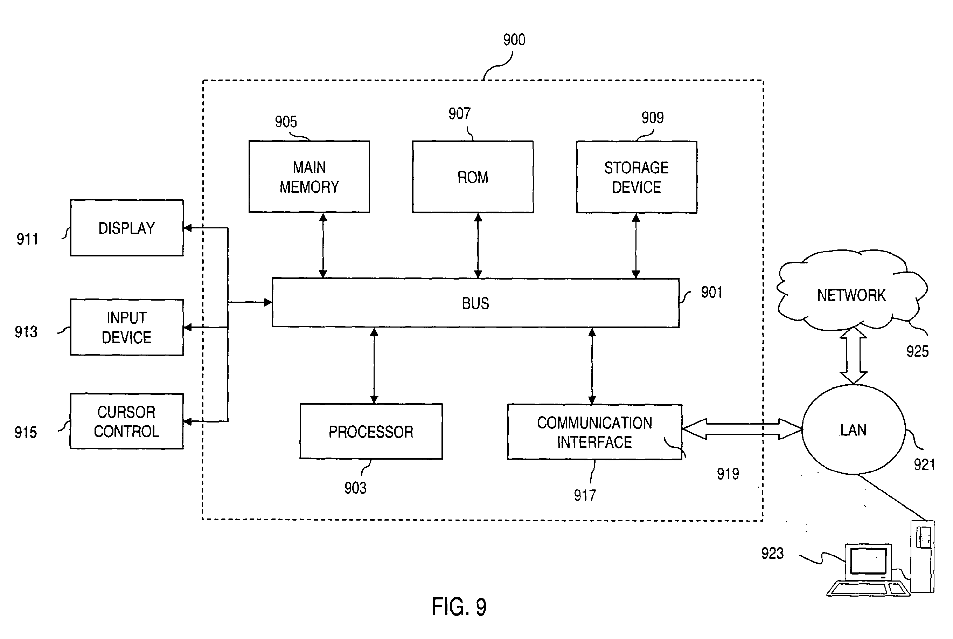

FIG. 9 is a diagram of a computer system that implement the CIR based throttling logic of FIG. 3, according to an embodiment of the present invention. The computer system 900 includes a bus 901 or other communication mechanism for communicating information and a processor 903 coupled to the bus 901 for processing information. The computer system 900 also includes main memory 905, such as a random access memory (RAM) or other dynamic storage device, coupled to the bus 901 for storing information and instructions to be executed by the processor 903. Main memory 905 can also be used for storing temporary variables or other intermediate information during execution of instructions by the processor 903. The computer system 900 may further include a read only memory (ROM) 907 or other static storage device coupled to the bus 901 for storing static information and instructions for the processor 903. A storage device 909, such as a magnetic disk or optical disk, is coupled to the bus 901 for persistently storing information and instructions.

The computer system 900 may be coupled via the bus 901 to a display 911, such as a cathode ray tube (CRT), liquid crystal display, active matrix display, or plasma display, for displaying information to a computer user. An input device 913, such as a keyboard including alphanumeric and other keys, is coupled to the bus 901 for communicating information and command selections to the processor 903. Another type of user input device is a cursor control 915, such as a mouse, a trackball, or cursor direction keys, for communicating direction information and command selections to the processor 903 and for controlling cursor movement on the display 911.

According to one embodiment of the invention, the processes of FIGs. 7 and 9 are implemented by the computer system 900 in response to the processor 903 executing an arrangement of instructions contained in main memory 905. Such instructions can be read into main memory 905 from another computer-readable medium, such as the storage device 909. Execution of the arrangement of instructions contained in main memory 905 causes the processor 903 to perform the process steps described herein. One or more processors in a multi-processing arrangement may also be employed to execute the instructions contained in main memory 905. In alternative embodiments, hard-wired circuitry may be used in place of or in combination with software instructions to implement the embodiment of the present invention. Thus, embodiments of the present invention are not limited to any specific combination of hardware circuitry and software.

The computer system 900 also includes a communication interface 917 coupled to bus 901. The communication interface 917 provides a two-way data communication coupling to a network link 919 connected to a local network 921. For example, the communication interface 917 may be a digital subscriber line (DSL) card or modem, an integrated services digital network (ISDN) card, a cable modem, a telephone modem, or any other communication interface to provide a data communication connection to a corresponding type of communication line. As another example, communication interface 917 may be a local area network (LAN) card (e.g. for Ethernet™ or an Asynchronous Transfer Model (ATM) network) to provide a data communication connection to a compatible LAN. Wireless links can also be implemented. In any such implementation, communication interface 917 sends and receives electrical, electromagnetic, or optical signals that carry digital data streams representing various types of information. Further, the communication interface 917 can include peripheral interface devices, such as a Universal Serial Bus (USB) interface, a PCMCIA (Personal Computer Memory Card International Association) interface, etc. Although a single communication interface 917 is depicted in FIG. 9, multiple communication interfaces can also be employed.

The network link 919 typically provides data communication through one or more networks to other data devices. For example, the network link 919 may provide a connection through local network 921 to a host computer 923, which has connectivity to a network 925 (e.g. a wide area network (WAN) or the global packet data communication network now commonly referred to as the "Internet") or to data equipment operated by a service provider. The local network 921 and the network 925 both use electrical, electromagnetic, or optical signals to convey information and instructions. The signals through the various networks and the signals on the network link 919 and through the communication interface 917, which communicate digital data with the computer system 900, are exemplary forms of carrier waves bearing the information and instructions.

The computer system 900 can send messages and receive data, including program code, through the network (s), the network link 919, and the communication interface 917. In the Internet example, a server (not shown) might transmit requested code belonging to an application program for implementing an embodiment of the present invention through the network 925, the local network 921 and the communication interface 917. The processor 903 may execute the transmitted code while being received and/or store the code in the storage device 909, or other non-volatile storage for later execution. In this manner, the computer system 900 may obtain application code in the form of a carrier wave.

The term "computer-readable medium" as used herein refers to any medium that participates in providing instructions to the processor 903 for execution. Such a medium may take many forms, including but not limited to non-volatile media, volatile media, and transmission media. Non-volatile media include, for example, optical or magnetic disks, such as the storage device 909. Volatile media include dynamic memory, such as main memory 905. Transmission media include coaxial cables, copper wire and fiber optics, including the wires that comprise the bus 901. Transmission media can also take the form of acoustic, optical, or electromagnetic waves, such as those generated during radio frequency (RF) and infrared (IR) data communications. Common forms of computer-readable media include, for example, a floppy disk, a flexible disk, hard disk, magnetic tape, any other magnetic medium, a CD-ROM, CDRW, DVD, any other optical medium, punch cards, paper tape, optical mark sheets, any other physical medium with patterns of holes or other optically recognizable indicia, a RAM, a PROM, and EPROM, a FLASH-EPROM, any other memory chip or cartridge, a carrier wave, or any other medium from which a computer can read.

Various forms of computer-readable media may be involved in providing instructions to a processor for execution. For example, the instructions for carrying out at least part of the present invention may initially be borne on a magnetic disk of a remote computer. In such a scenario, the remote computer loads the instructions into main memory and sends the instructions over a telephone line using a modem. A modem of a local computer system receives the data on the telephone line and uses an infrared transmitter to convert the data to an infrared signal and transmit the infrared signal to a portable computing device, such as a personal digital assistant (PDA) or a laptop. An infrared detector on the portable computing device receives the information and instructions borne by the infrared signal and places the data on a bus. The bus conveys the data to main memory, from which a processor retrieves and executes the instructions. The instructions received by main memory can optionally be stored on storage device either before or after execution by processor.

Accordingly, an approach is provided for performing traffic shaping of a shared capacity communication system (e.g., wireless, terrestrial, or satellite systems) using a throttling mechanism that is based on Committed Information Rate (CIR) levels. The CIR based throttling mechanism utilizes a Flow Control Meter to track the load (e.g., outroutes) to regulate bandwidth that is made available to the users. By establishing thresholds corresponding to various transmission states, the throttling mechanism can control traffic behavior of users, thereby promoting fair access and more effectively guarantee Service Level Agreements (SLAs).

While the present invention has been described in connection with a number of embodiments and implementations, the present invention is not so limited but covers various obvious modifications and equivalent arrangements, which fall within the purview of the appended claims.

**Claims**

1. A method for shaping traffic of a communication system, the method comprising:

comparing capacity usage by a network element of the communication with a plurality of thresholds indicating loading of the communication system; and
in response to the comparison, regulating traffic to the network element according to one of a plurality of transmission states corresponding to the plurality of thresholds and a committed information rate (CIR) designated for the network element.

2. A method according to claim 1, wherein the traffic in the regulating step includes a frame, the method further comprising:

determining whether the capacity usage by the network element exceeds the committed information rate; and
storing the frame, if the capacity usage exceeds the committed information rate, in a queue organized by class of service levels according to the committed information rate.

**3.** A method according to claim 2, the method further comprising:

determining whether the frame stored in the queue is stale; and
discarding the frame if the frame is stale, wherein the frame is forwarded to a transmission queue if the frame is not stale.

**4.** A method according to claim 2, further comprising:

determining whether the queue has available space for the frame; and
placing the frame in another queue for blocked frames if the queue does not have available space.

**5.** A method according to claim 1, further comprising:

maintaining a flow control meter to track the loading of the communication system; and
computing the plurality of thresholds according to the flow control meter.

**6.** A method according to claim 1, wherein the communication system includes a satellite network, and the network element is a Very Small Aperture Terminal (VSAT), the method further comprising:

limiting use of outroutes of the satellite network according to the one transmission state.

**7.** A method according to claim 1, wherein the transmission states in the comparing step include an unthrottled state, a soft throttle state, a hard throttle state, and a discard throttle state.

**8.** A computer-readable medium bearing instructions for shaping traffic of a communication system, the instructions being arranged, upon execution, to cause one or more processors to perform the step of a method according to claim 1.

**9.** A system for forwarding traffic in a communication network based on class of service levels, the system comprising:

logic configured to compare capacity usage by a terminal with a plurality of thresholds indicating loading of the communication network, wherein the logic is further configured to regulate the traffic to the terminal according to one of a plurality of transmission states corresponding to the plurality of thresholds and one of the class of service levels; and
a queue organized according to the class of service levels and configured to store a frame destined to the terminal according to the one class of service level if the capacity usage exceeds a committed information rate (CIR) associated with the terminal.

**10.** A system according to claim 9, wherein the logic determines whether the frame stored in the queue is stale, the frame being discarded if the frame is stale.

**11.** A system according to claim 9, further comprising:

another queue for storing the frame as a blocked frame if the queue does not have available space.

**12.** A system according to claim 9, further comprising:

a flow control meter configured to track the loading of the communication network, wherein the plurality of thresholds are determined according to the flow control meter.

**13.** A system according to claim 9, wherein the communication network includes a satellite for forwarding the traffic, and the terminal is a Very Small Aperture Terminal (VSAT).

**14.** A system according to claim 9, wherein the transmission states include an unthrottled state, a soft throttle state, a hard throttle state, and a discard throttle state.

**15.** A method for supporting a fair access policy to exchange traffic in a radio communication system, the method comprising:

assigning a committed information rate (CIR) level to a terminal according to one of a plurality of throttling states that specify respective different throughput levels according to loading of the communication system; and

forwarding the traffic to the terminal based on the one throttling state, wherein the traffic throughput is limited to the CIR level of the terminal.

**16.** A method according to claim 15, the method further comprising:

selectively storing a frame in a queue organized according to CIR levels;
determining whether the frame stored in the queue is stale; and
discarding the frame if the frame is stale.

**17.** A computer-readable medium bearing instructions for supporting a fair access policy to exchange traffic in a radio communication system, the instructions being arranged, upon execution, to cause one or more processors to perform the step of a method according to claim 15.

**18.** A system for shaping traffic of a communication network, the system comprising:

means for comparing capacity usage by a network element of the communication with a plurality of thresholds indicating loading of the communication network; and
means for regulating traffic, in response to the comparison, to the network element according to one of a plurality of transmission states corresponding to the plurality of thresholds and a committed information rate (CIR) designated for the network element.

**19.** A system according to claim 18, wherein the traffic includes a frame, the system further comprising:

a means for determining whether the capacity usage by the network element exceeds the committed information rate; and
a queue organized according to the class of service levels for storing the frame in according to the committed information rate if the capacity usage exceeds the committed information rate.

**20.** A system according to claim 19, the system further comprising:

means for determining whether the frame stored in the queue is stale; and
means for discarding the frame if the frame is stale, wherein the frame is forwarded to a transmission queue if the frame is not stale.

**21.** A system according to claim 19, further comprising:

means for determining whether the queue has available space for the frame; and
means for placing the frame in another queue for blocked frames if the queue does not have available space.

**22.** A system according to claim 18, further comprising:

means for maintaining a flow control meter to track the loading of the communication network; and
means for computing the plurality of thresholds according to the flow control meter.

**23.** A system according to claim 18, wherein the communication network includes a satellite network, and the network element is a Very Small Aperture Terminal (VSAT), the system further comprising:

means for limiting use of outroutes of the satellite network according to the one transmission state.

**24.** A system according to claim 18, wherein the transmission states include an unthrottled state, a soft throttle state, a hard throttle state, and a discard throttle state.

FIG. 1

FIG. 2

EP 1 553 740 A1

FIG. 3

GATEWAY 300                                    303

CONTENT →

CIR BASED
THROTTLING
LOGIC
301

FLOW CONTROL
METER 305

OUTROUTES 307

FIG. 4

NON-THROTTLED
401

DISCARD
THROTTLE
407

SOFT
THROTTLE
403

HARD
THROTTLE
405

EP 1 553 740 A1

START

501 — COMPUTE THROTTLING VALUE BASED ON FLOW CONTROL METER

503 — COMPUTE THRESHOLDS BASED ON THROTTLING VALUE

505 — EXAMINE USER BUCKET DEPTH

507 — DISCARD THRESHOLD EXCEEDED ?

YES → 509 — DISCARD PACKETS FROM USER

511 — HARD THRESHOLD EXCEEDED ?

YES → 513 — ADJUST USER USAGE ACCORDING TO HARD THROTTLED STATE SETTINGS

515 — SOFT THRESHOLD EXCEEDED ?

YES → 517 — ADJUST USER USAGE ACCORDING TO SOFT THROTTLED STATE SETTINGS

NO → END

FIG. 5

FIG. 6

FIG. 7A

START

701 EXAMINE CIRLeft

703 CIRLeft > 0 ?

713 FIRST FRAME IN THIS TICK ?

715 SET CIRLeft = CIRLevel (BASED ON THROTTLING STATE) AND CIR TICK FOR THIS USER

717 MAP CoS TO OUTROUTE PRIORITY

A

705 IDENTIFY CIR QUEUE FOR THIS CoS

707 SPACE AVAILABLE ON CIR QUEUE ?

711 REMOVE A FRAME FROM THE CIR QUEUE

709 QUEUE INCOMING FRAME ON THE CIR QUEUE

END

EP 1 553 740 A1

719 — PUT FRAME ON APPROPRIATE UPLINK QUEUE BASED ON OUTROUTE PRIORITY

721 — DECREMENT CIRLeft

723 — CIRLeft < 0 ?

YES

NO

725 — PLACE USER ON BLOCKED QUEUE

END

FIG. 7B

EP 1 553 740 A1

START

801 — REINITIALIZE CIRLevel AND CIR TICK (FOR A PARTICULAR USER) BASED ON THROTTLING STATE

803 — CIRLeft > 0 AND ANY CIR QUEUE NOT EMPTY ?

NO

YES

815 — DISCARD FRAME

811 — REMOVE FRAME FROM THE CIR QUEUE

813 — FRAME STALE ?

YES

NO

817 — PLACE FRAME ON APPROPRIATE UPLINK QUEUE

819 — ADJUST CIRLeft

END

809 — MOVE TO NEXT BLOCKED USER

REMOVE THIS USER FROM BLOCKED QUEUE

YES

807 — 

805 — CIRLeft > 0 ?

NO

FIG. 8

24

FIG. 9

## EUROPEAN SEARCH REPORT

**European Patent Office**

Application Number

EP 05 25 0041

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/154272 A1 (DILLON DOUGLAS ET AL) 14 August 2003 (2003-08-14) * paragraph [0006] - paragraph [0059]; figures 1-5 * * page 8 - page 10 * ----- | 1-24 | H04L12/56 |
| X | EP 1 283 606 A (HUGHES ELECTRONICS CORPORATION) 12 February 2003 (2003-02-12) * paragraph [0024] - paragraph [0124]; figures 1,3-5,6A,6B,7,8 * ----- | 1-24 | |

TECHNICAL FIELDS SEARCHED (Int.Cl.7)

H04L

The present search report has been drawn up for all claims

| Place of search | Date of completion of the search | Examiner |
|---|---|---|
| Munich | 4 April 2005 | García Bolos, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 25 0041

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2005

| Patent document cited in search report | Publication date | Patent family member(s) | Publication date |
|---|---|---|---|
| US 2003154272 A1 | 14-08-2003 | NONE | |
| EP 1283606 A | 12-02-2003 | US 2003035385 A1<br>EP 1283606 A2 | 20-02-2003<br>12-02-2003 |

EPO FORM P0459

For more details about this annex : see Official Journal of the European Patent Office, No. 12/82